# EUROPEAN PATENT APPLICATION

(11) **EP 4 794 058 A1**
(43) Date of publication of application: **19.08.2026**
(21) Application number: 26150823.8
(22) Date of filing: 08.01.2026
(51) Int. Cl.: H01M 10/613, F28F 3/12, H01M 10/647, H01M 10/6555, H01M 10/6557, H01M 10/6567, H01M 50/293

(54) **BATTERY CELL COOLING MEMBER, BATTERY MODULE, AND BATTERY COOLING SYSTEM**

(30) Priority: 14.02.2025 KR 20250019577
(71) Applicant: SAMSUNG SDI CO., LTD., Yongin-si, Gyeonggi-do 17084 (KR)
(72) Inventor: SEOL, Jihwan, Yongin-si, Gyeonggi-do 17084 (KR)
(74) Representative: Gulde & Partner

(57) **Abstract**

A battery cell cooling member is arranged between adjacent battery cells and includes two facing plates formed on an inner side between the battery cells to face the battery cells, respectively, and an elastic pad between the two facing plates and having a cooling path.

## Description

### BACKGROUND

### 1. Field

Aspects of embodiments of the present disclosure relate to a battery cell cooling member, a battery module, and a battery cooling system.

### 2. Description of the Related Art

Different from primary batteries that are not designed to be (re)charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as in hybrid vehicles or electric vehicles, and for power storage. A secondary battery generally includes an electrode assembly consisting of (or including) a positive electrode and a negative electrode, a case accommodating the electrode assembly, a terminal part connected to the electrode assembly, etc.

In a battery module including a plurality of battery cells, a battery cell cooling member is inserted between the battery cells. A conventional battery cell cooling member cools cells through lower-end cooling by inserting an adiabatic material or implements cell cooling by allowing cooling liquid to flow into an interlayer structure between cells. However, the conventional cell cooling member does not sufficiently lower a cell temperature and/or does not sufficiently absorb volume expansion due to cell swelling, which shortens cell life.

Accordingly, conventional a battery module includes cooling parts, such as heat sinks, cooling plates, cooling fins, and cooling fans, but these solutions increase battery module size and increase manufacturing cost.

With an increase in the demand for rapid-charging electric vehicles, heat management concerns are paramount.

The above information disclosed in this Background section is for enhancement of understanding of the background of the present disclosure, and therefore, it may contain information that does not constitute related (or prior) art.

### SUMMARY

Embodiments of the present disclosure provide a battery cell cooling member including facing plates that cool (e.g., absorb and/or remove) heat generated from a battery cell and an elastic pad that absorbs volume expansion due to swelling of the battery cell and has a cooling path, a battery module including the same, and a battery cell cooling system including the same.

However, aspects and features of the present disclosure are not limited to those described above, and other aspects and features not mentioned herein will be clearly understood by those skilled in the art from the description of the present disclosure.

A battery cell cooling member, according to an embodiment of the present disclosure, is arranged between adjacent battery cells and includes: two facing plates formed on an inner side between the battery cells to face the battery cells, respectively; and an elastic pad between the two facing plates to absorb volume expansion due to swelling of the battery cell. The elastic pad has a cooling path along which cooling fluid supplied from an outside of the battery cell flows.

In one embodiment, the cooling path may be in the form of one or more straight or curved shapes so that the cooling fluid flows along one surface of the battery cell.

In one embodiment, the cooling fluid may be a gas, a liquid, or a mixture of the gas and the liquid.

In one embodiment, the cooling member may have a thickness in a range of 2.5 mm to 5 mm.

In one embodiment, the elastic pad may be made of polyurethane foam.

In one embodiment, the elastic pad may have a thickness in a range of 1.7 mm to 3.4 mm.

In one embodiment, the facing plates may be made of aluminum (Al).

In one embodiment, the battery cell cooling member may further include a tube extending along the cooling path.

A battery module, according to an embodiment of the present disclosure, includes: a plurality of battery cells and a battery cell cooling member arranged between adjacent ones of the battery cells. The battery cell cooling member includes: two facing plates formed on an inner side between the adjacent ones of the battery cells to face the battery cells, respectively; and an elastic pad between the two facing plates to absorb volume expansion due to swelling of the battery cells. The elastic pad has a cooling path along which cooling fluid supplied from an outside of the battery module flows.

In one embodiment, the cooling path may be in the form of one or more straight or curved shapes so that the cooling fluid flows along one surface of the battery cell.

In one embodiment, the cooling fluid may be a gas, a liquid, and a mixture of the gas and the liquid.

In one embodiment, the cooling member may have a thickness in a range of 2.5 mm to 5 mm.

In one embodiment, the elastic pad may be made of polyurethane foam.

In one embodiment, the elastic pad may have a thickness in a range of 1.7 mm to 3.4 mm.

In one embodiment, the facing plates may be made of aluminum (Al).

In one embodiment, the battery module may further include a tube extending along the cooling path.

A battery cooling system, according to an embodiment of the present disclosure, includes: a battery cell cooling member including two facing plates formed on an inner side between two adjacent battery cells in a battery module to face the battery cells, respectively, and an elastic pad between the two facing plates to absorb volume expansion due to swelling of the battery cells and having a cooling path along which cooling fluid supplied from outside of the battery module flows; and a fluid supply device outside of the battery module and configured to supply cooling fluid to the battery cell cooling member.

In one embodiment, the fluid supply device may include: a fluid transfer unit outside the battery module to receive the cooling fluid and including an injection port into which the cooling fluid is injected and a discharge port through which the cooling fluid injected through the injection port is discharged; a circulation line connecting the injection port and the discharge port and through which the cooling fluid is circulated; a heat exchange unit installed along the circulation line; a circulation pump installed along the circulation line and configured to pump the cooling fluid to flow in one direction; a pressure measurement unit installed along the circulation line and configured to measure a pressure of the cooling fluid discharged through the discharge port; and a controller configured to control volume of the cooling fluid according to pressure of the cooling fluid.

In one embodiment, when the pressure of the cooling fluid measured by the pressure measurement unit is higher than a reference pressure, the fluid supply device may be configured to decrease a volume of the cooling fluid in the battery cell cooling member via the controller.

In one embodiment, when the pressure of the cooling fluid measured by the pressure measurement unit is lower than a reference pressure, the fluid supply device may be configured to increase a volume of the cooling fluid in the battery cell cooling member via the controller.

Embodiments of the present disclosure include a thermoelectric element that cools heat generated from a battery cell and an elastic pad that absorbs volume expansion due to swelling of the battery cell and uses a face-to-face cooling method instead of a lower cooing method while absorbing the volume expansion through the elastic pad with a cooling path, thereby increasing the life of the battery cell and module through the cell cooling and absorption of the volume expansion due to cell swelling.

According to embodiments of the present disclosure, when using a high charging/discharging rate (c-rate) such as during rapid charging, lowering the temperature of a cell and absorbing volume expansion due to swelling of the cell according to the progress of charging/discharging are provided together, and a fluid supply device, such as a pressure control device, is provided outside the battery, thereby avoiding an increase in battery module size and increased manufacturing cost.

According to embodiments of the present disclosure, a tube may be provided in a cooling path, so that the leakage of cooling fluid can be prevented.

According to embodiments of the present disclosure, because a cooling path is formed in an elastic pad instead of in a flat type without extrusion processing of a metal body, processing and durability are improved.

However, aspects and features of the present disclosure are not limited to those described above, and other aspects and features not mentioned will be clearly understood by a person skilled in the art from the detailed description, provided below.

### BRIEF DESCRIPTION OF THE DRAWINGS

The following drawings attached to this specification illustrate embodiments of the present disclosure and help to further described the technical scope, aspects, and features of the present disclosure along with the aforementioned contents of the disclosure. Accordingly, the present disclosure should not be construed as being limited to the content described in the drawings, in which:
FIG. 1A is a top perspective view of a prismatic secondary battery;
FIG. 1B is a cross-sectional view taken along the line I-I' in FIG. 1A;
FIG. 2A is a perspective view of a battery module;
FIG. 2B is an exploded view of the battery module shown in FIG. 2A;
FIGS. 3A and 3B are views illustrating battery cell cooling members in the battery module;
FIG. 4A is a view of a battery cell cooling member of a battery module according to an embodiment of the present disclosure;
FIG. 4B is an exploded view of the battery cell cooling member shown in FIG. 4A;
FIG. 4C is a cross-sectional view taken along the line I-I' in FIG. 4A;
FIG. 5 is a view of a battery cell cooling member of a battery module according to another embodiment of the present disclosure;
FIG. 6 is a view of a battery cell cooling member of a battery module according to another embodiment of the present disclosure;
FIG. 7 is a view of a battery cell cooling member of a battery module according to another embodiment of the present disclosure; and
FIG. 8 is a block diagram describing a connection relationship between a control unit and each component in a fluid supply device according to an embodiment of the present disclosure.

### DETAILED DESCRIPTION

Embodiments of the present disclosure will be described below, in detail, with reference to the accompanying drawings. Prior to the description, it is noted that the terms or words used in this specification and claims should not be construed as being limited to their common or dictionary meanings but should be understood to have meanings and concepts in agreement with the scope of the present disclosure based on the principle that an inventor can define the concept of each term suitably in order to describe his/her own invention in the best way possible. The embodiments described in this specification and the configurations illustrated in the drawings are only examples of the present disclosure and do not cover all the technical ideas and embodiments of the present disclosure; therefore, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings may not be drawn to scale and the dimensions of some components may be exaggerated. It should be noted that the same reference numerals are designated to the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described in detail with reference to the attached drawings.

Examples of secondary batteries include a coin type, a cylindrical type, a prismatic type, and a pouch type. The present disclosure is generally applicable to a prismatic secondary battery but is not limited thereto. The prismatic secondary battery will be briefly described prior to description of embodiments of the present disclosure.

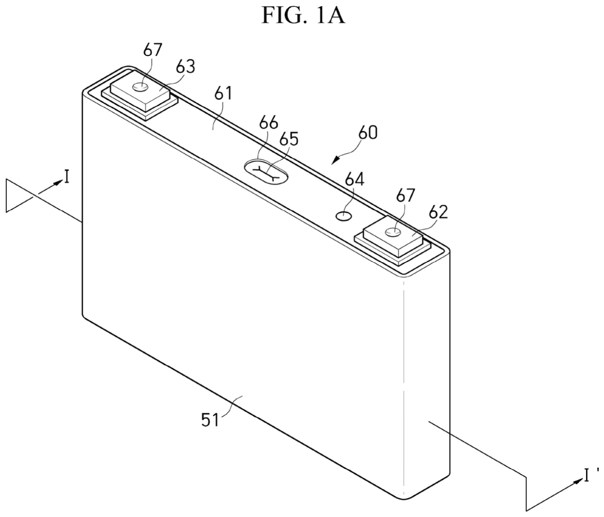

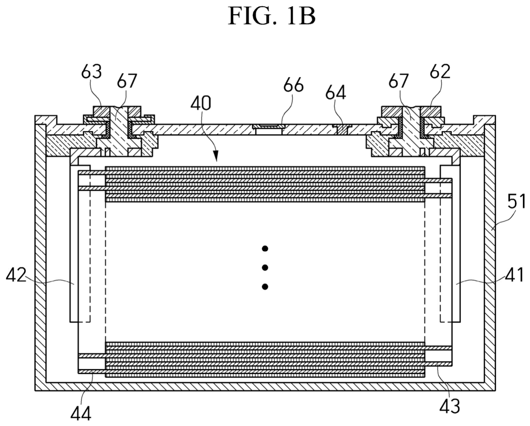

FIG. 1A is a top perspective view of the prismatic secondary battery. FIG. 1B is a cross-sectional view taken along the line I-I' in FIG. 1A.

First, the external appearance of the prismatic secondary battery illustrated in FIG. 1A will be described.

A casing (or case) 51 defines an overall appearance of the prismatic secondary battery and may be made of a conductive metal, such as aluminum, aluminum alloy, or nickel-plated steel. In addition, the casing 51 may provide (or may form) a space for accommodating an electrode assembly therein.

A cap assembly 60 may include a cap plate 61 that covers an opening in the casing 51, and the cap assembly 60 and the cap plate 61 may be made of a conductive material. A first terminal 62 and a second terminal 63 may be respectively electrically connected to positive and negative (or negative and positive) electrodes inside the casing 51 and may protrude outwardly through the cap plate 61.

The cap plate 61 may have an electrolyte injection port 64 with (or configured to receive) a sealing plug and a vent 66 having a notch 65. The vent 66 is for degassing the secondary battery, that is, for discharging excess gas generated inside the secondary battery.

With reference to FIG. 1B, the internal structure of the prismatic secondary battery and the coupling structure with the cap assembly 60 will be described.

As illustrated in FIG. 1B, the prismatic secondary battery generally includes an electrode assembly 40, a first current collector part 41, a first terminal 62, a second current collector part 42, a second terminal 63, and a cap assembly 60.

The electrode assembly 40 may be formed by winding or stacking a laminate of a first electrode plate, a separator, and a second electrode plate, which are in the form of a plate or a film. When the electrode assembly 40 is a wound laminate, it may have a winding axis parallel to the longitudinal direction of the casing 51. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides (e.g., opposite sides) of a separator, which is then bent into a Z-stack. Furthermore, the electrode assembly 40 may include one or more electrode assemblies, which are stacked such that their long sides are adjacent to each other and accommodated in the casing 51, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of a metal foil, such as copper, copper alloy, nickel, or nickel alloy. The first electrode plate may include a first electrode tab (e.g., a first uncoated part) 43, which is a region of first electrode current collector plate without application of the first electrode active material. The first electrode tab 43 may act as a current flow passage between the first electrode plate and the first current collector part 41. In some embodiments, the first electrode tab 43 may be formed by cutting the first electrode plate to protrude to one side in advance when manufacturing the first electrode plate but may protrude further to one side than the separator without separate cutting.

The second electrode plate may be formed by applying a second electrode active material, such as transition metal oxide, to a second electrode current collector plate made of a metal foil, such as aluminum or aluminum alloy. The second electrode plate may include a second electrode tab (e.g., second uncoated part) 44, which is a region of the second electrode current collector plate without application of the second electrode active material. The second electrode tab 44 may act as a current flow passage between the second electrode plate and the second current collector part 42. In some embodiments, the second electrode tab 44 may be formed by cutting the second electrode plate to protrude to the other side in advance when manufacturing the second electrode plate but may protrude further to the other side than the separator without separate cutting.

In some embodiments, the first electrode tab 43 may be located on the right end side of the electrode assembly 40, and the second electrode tab 44 may be located on the left end side of the electrode assembly 40. In another embodiment, the first electrode tab 43 and the second electrode tab 44 may be located on one end side of the electrode assembly 40 in the same direction. Here, the left and the right are represented based on the secondary battery as illustrated in FIG. 1B for convenience of explanation, and they may change in position when the secondary battery is rotated left and right or up and down.

The separator prevents a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends of the electrode assembly 40 as described above, respectively. In some embodiments, the electrode assembly 40 may be accommodated in the casing 51 together with an electrolyte.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described above with reference to FIG. 1A, through terminal pins 67, respectively. In some embodiments, the terminal pins 67 may each have an outer peripheral surface that is threaded and may be fastened to the first terminal 62 and the second terminal 63 by screwing. However, the present disclosure is not limited thereto. For example, in other embodiments, the terminal pins 67 may also be coupled to the first terminal 62 and the second terminal 63 by riveting, welding or latching.

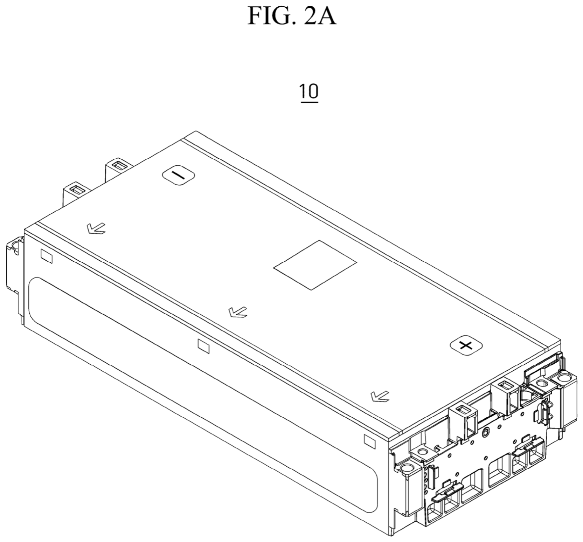

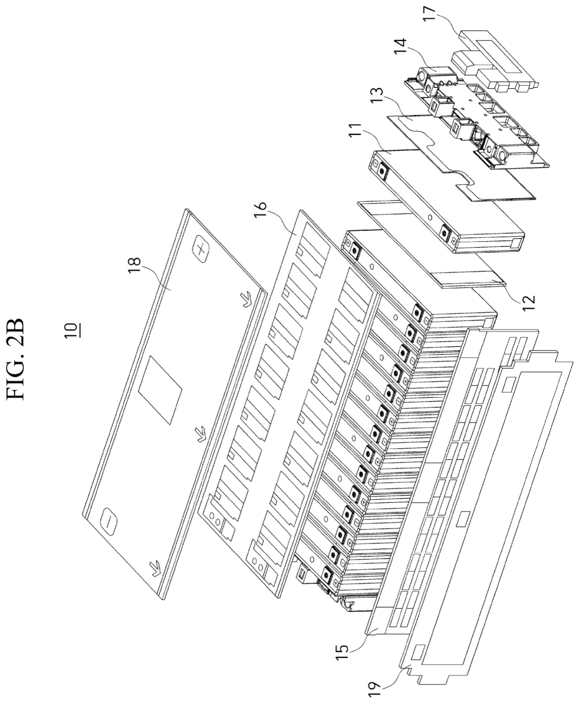

FIG. 2A is a perspective view of a battery module, and FIG. 2B is an exploded view of the battery module shown in FIG. 2A.

Referring to FIGS. 2A and 2B, a battery module 10 in the related art may include a plurality of battery cells 11, a battery cell cooling member 12, a terminal battery cell cooling member 13, an end plate 14, a side battery cell cooling member 15, a bus bar assembly 16, a cell module controller (e.g., a cell management controller (CMC) 17, an upper cover 18, and a side plate 19.

The plurality of battery cells 11 may be prismatic secondary battery cells such as are described above with reference to FIGS. 1A and 1B.

The battery cell cooling member 12 is provided between adjacent ones of the plurality of battery cells 11 and prevents current from flowing or heat from being transferred between the plurality of battery cells 11.

The terminal battery cell cooling member 13 is provided between the outermost battery cell 11 and the end plate 14 and prevents current from flowing or heat from being transferred to the outside from the outermost battery cell 11.

The end plate 14 is provided outside the outermost battery cell 11 and protects the plurality of battery cells 11.

The side battery cell cooling member 15 is provided on the lateral side of the plurality of battery cells 11 and prevents current from flowing or heat from being transferred to the outside through the lateral side of the plurality of battery cells 11.

The bus bar assembly 16 forms an electrical connection between the plurality of battery cells 11 to satisfy a capacity design for the battery module 10.

The CMC 17 monitors and controls currents, voltages, temperatures, and the like of the plurality of battery cells 11 included in the battery module 10.

The upper cover 18 and the side plate 19 are provided on the upper and lateral side of the plurality of battery cells 11, respectively, and protect the plurality of battery cells 11.

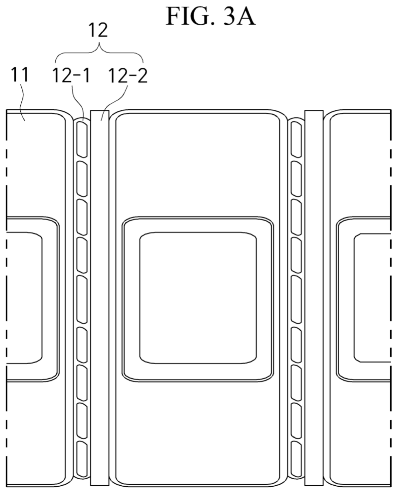

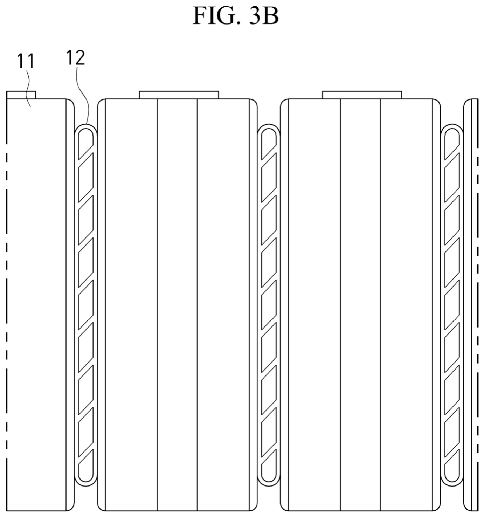

FIGS. 3A and 3B are views illustrating the battery cell cooling member in the related art.

FIG. 3A illustrates, as an example of the battery cell cooling member 12 of the battery module shown in FIGS. 2A and 2B, a battery cell cooling member 12 including a compression pad 12-1 and a lower cooling member 12-2 between the battery cells 11. In such a case, the battery cell cooling member 12 includes the compression pad 12-1, which has a thickness in a range of 1 mm to 3 mm, and the lower cooling member 12-2. When cooling the lower part of the cell by the adiabatic effect of the compression pad 12-1 and the lower cooling member 12-2, a cooling area is small compared to the facing surface of the battery cell 11, such that is a limit to the cooling of the battery cell 11.

FIG. 3B illustrates, as another example of the battery cell cooling member 12 of the battery module shown in FIGS. 2A and 2B, a battery cell cooling member 12 has an interlayer structure in which cooling liquid flows between the battery cells 11. In such a case, the battery cell cooling member 12 having the interlayer structure in which the cooling liquid flows is rigid and cannot absorb volume expansion due to the swelling of the battery cell 11.

Therefore, such a battery cell cooling member 12 in the related art does not sufficiently lower a cell temperature and/or does not sufficiently absorb volume expansion due to cell swelling to shorten cell life.

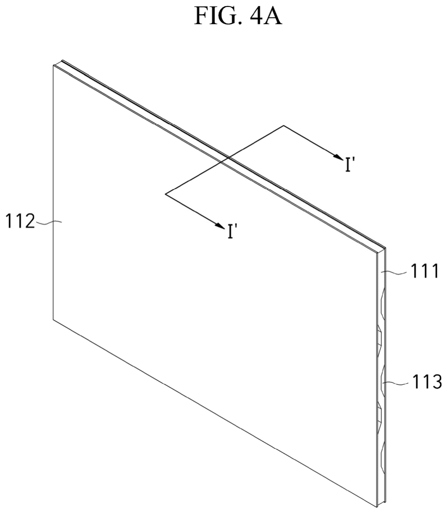

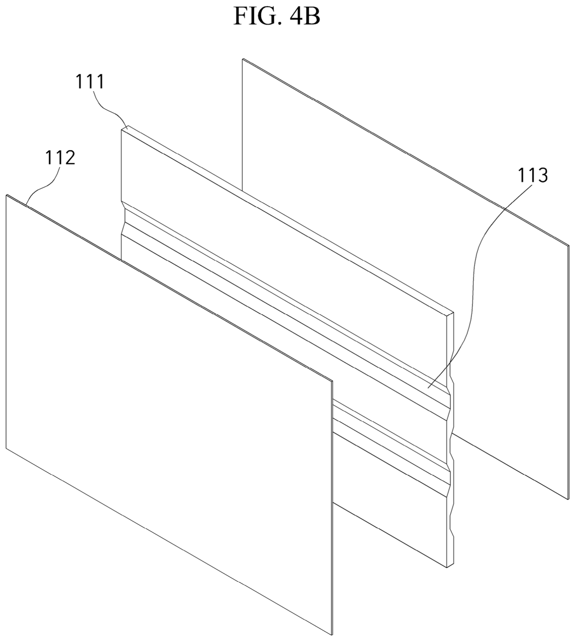

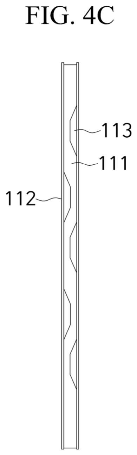

FIGS. 4A and 4B are views of a battery cell cooling member of a battery module according to an embodiment of the present disclosure.

Referring to FIGS. 4A and 4B, the battery cell cooling member may include two facing plates 112 and an elastic pad 111 having a cooling path 113 therebetween.

In one embodiment, the facing plate 112 may be made of aluminum (Al). The two facing plates 112 transfer heat generated from a battery cell to a cooling fluid and primarily suppress volume expansion when swelling of the battery cell occurs. To effectively perform heat transfer and volume expansion suppression, the two facing plates 112 may have an area corresponding to (e.g., substantially the same as) the area of a front or rear surface, which is the widest surface, of the battery cell. Accordingly, the front or rear surface of the cell is more effectively cooled compared to a lower cooling method so that a temperature rise due to rapid charging current can be effectively controlled.

The elastic pad 111 is provided between the two facing plates 112 and absorbs volume expansion due to swelling of the battery cell. The elastic pad 111 is made of an elastic material, and when volume expansion occurs due to swelling of the battery cell, the elastic pad 111 is compressed to absorb the volume expansion. In one embodiment, the elastic pad 111 may be made of polyurethane foam.

The elastic pad 111, according to one embodiment of the present disclosure, may be made of a thermally conductive elastomer, such as carbon nanotube, polyurethane, or silicon-based material.

In one embodiment, the cooling fluid may include one or more of a gas, a liquid, and a mixture of gas and liquid flowing along the cooling path 113. Accordingly, when swelling occurs, a space between the facing plates 112 is compressed by the cooling fluid containing gas, thereby reducing pressure applied to the cooling member due to the swelling.

The battery cell cooling member may have a thickness in a range of about 2.5 mm to about 5 mm because the durability of the cooling member decreases when its thickness is less than about 2.5 mm and the energy density efficiency of the module decreases when its thickness exceeds about 5 mm.

The elastic pad 111 may have a thickness in a range of about 1.7 mm to about 3.4 mm because the volume reduction due to swelling is insufficient when its thickness is less than about 1.7 mm and the energy density efficiency of the module decreases when its thickness exceeds about 3.4 mm.

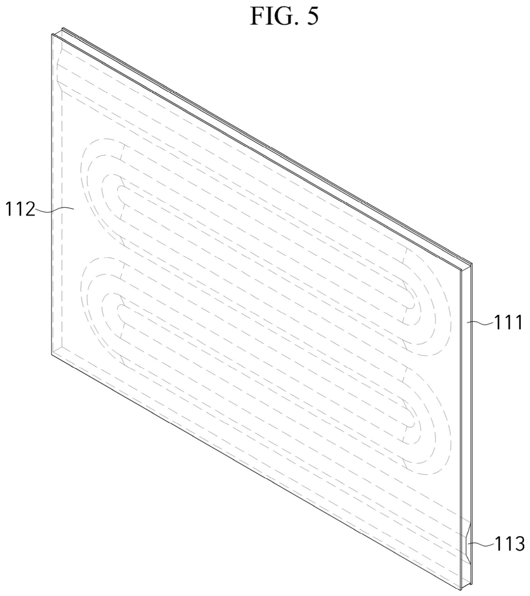

FIG. 5 is a view of a battery cell cooling member of a battery module according to another embodiment of the present disclosure.

In one embodiment, the cooling path 113 may be formed in one or more straight or curved shapes on one or both sides of the elastic pad 111. For example, when the temperature rise of the battery cell is large due to rapid charging or the like, the cooling fluid may have a large flow rate (e.g., a long flow path), such as an S-shape or a grid shape, so that an area in contact with the facing plate is in a range of about 70% to about 80% of the facing plate 112. In another embodiment, when the temperature rise of the battery cell is small but the swelling of the battery cell is large, the cooling path may a single straight line shape or a single curve shape including more elastic pads so that the area in contact with the facing plate is in a range of about 20% to about 30%.

In one embodiment, the shape of the cooling path 113, the capacity of the cooling fluid, the flow rate, the area in contact with the facing plate 112, and the like may be determined by appropriate selection by a person skilled in the art in consideration of the degree of cooling required and the degree of swelling depending on the characteristics of the battery cell.

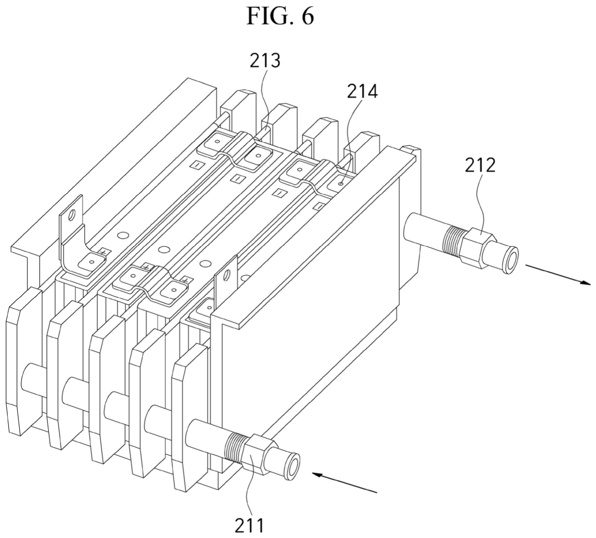

FIG. 6 is a view of a battery cell cooling member of a battery module according to another embodiment of the present disclosure.

Referring to FIG. 6, a cooling member 213 may be provided between two battery cells 214 to face the two battery cells 214 to configure the battery module.

The battery cell cooling member 213 of the battery module according to an embodiment of the present disclosure may have a structure as illustrated in FIG. 5 so that cooling fluid can effectively cool the battery cell by facing a facing plate and an elastic pad located in the middle of the facing plate can absorb volume expansion due to swelling of the battery cell.

Referring to FIG. 6, in one embodiment, the cooling fluid is introduced into an injection port 211 by a fluid supply device (e.g., a pump) provided outside the battery, flows in the same direction as (e.g., flows toward) the battery cell through a cooling path provided in the cooling member 213, and is discharged through a discharge port 212. Accordingly, heat from the battery cell 214 is introduced into the cooling fluid by passing through the facing plate so that the temperature of the battery cell can be lowered through indirect heat exchange.

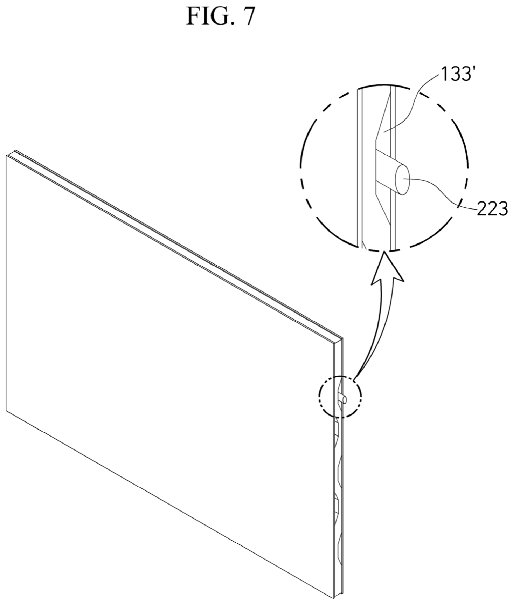

FIG. 7 is a view of a battery cell cooling member of a battery module according to another embodiment of the present disclosure.

Referring to FIG. 7, a cooling member may include a tube 223 in a cooling path 133' provided in an elastic pad. The tube 223 may be provided in each of the cooling paths 133' or may be provided in a cooling path 133' that requires leakage prevention. Accordingly, contamination of the battery module due to leakage of cooling fluid can be prevented.

The tube 223, according to one embodiment of the present disclosure, may be made of a thermally conductive elastomer, such as a carbon nanotube, polyurethane, or silicon-based material.

The tube 223, according to one embodiment of the present disclosure, may have a circular or polygonal cross-section. When the temperature rise of the battery cell is large (e.g., is anticipated to be large) due to rapid charging or the like, the cooling path may be provided in a rectangular shape, an elliptical shape, or the like with a large cross-section with a large flow rate of the cooling fluid so that the area of the tube 223 in contact with the facing plate is in a range of about 60% to about 70% of the facing plate. Alternatively, when the temperature rise of the battery cell is small (e.g., is anticipated to be small) but the swelling of the battery cell is large (e.g., is anticipated to be large), the cooling path may be provided in a circular shape, a square shape, or the like with more elastic pads so that the area of the tube 223 in contact with the facing plate is in a range of about 10% to about 20% of the facing plate.

In one embodiment, the shape of the tube 223, the capacity of the cooling fluid passing through the tube 223, the flow rate, the area in contact with the facing plate and the like may be determined by appropriate selection by a person skilled in the art in consideration of the degree of cooling required and the degree of swelling depending on the characteristics of the battery cell.

According to one embodiment of the present disclosure, a volume occupied in the cooling path of the tube 223, a flow rate, an area in contact with the facing plate, and the like according to the degree of cooling desired or necessary.

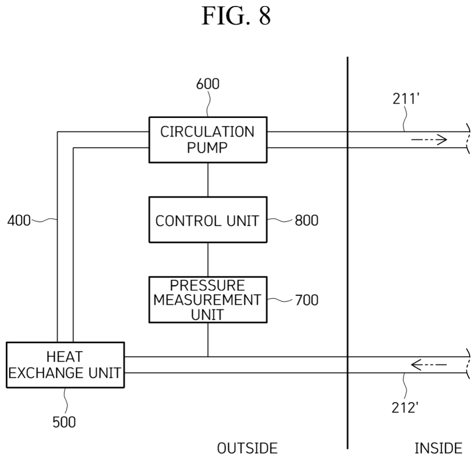

FIG. 8 is a block diagram describing a connection relationship between components of a fluid supply device according to an embodiment of the present disclosure.

Referring to FIG. 8, the fluid supply device, according to an embodiment of the present disclosure, may include a circulation line 400, a heat exchange unit (e.g., a heat exchanger) 500, a circulation pump 600, a pressure measurement unit 700, and a control unit (e.g., a controller) 800. The circulation line 400 connects an injection port 211' and a discharge port 212' provided in each fluid transfer body. The circulation line 400 allows fluid to circulate so that the fluid discharged through the discharge port 212' is re-injected into the injection port 211'. The heat exchange unit 500 is installed on (or along) the circulation line 400. The heat exchange unit 500 is provided to cool fluid whose temperature has increased after removing heat generated from a battery module and lowers the temperature of the fluid discharged through the discharge port 212'. Various suitable heat exchangers can be applied as the heat exchange unit 500 within the technical concept of removing high-temperature heat from the fluid and cooling the fluid. The circulation pump 600 is installed on (or along) the circulation line 400. The circulation pump 600 pumps the fluid to flow in one direction through the circulation line 400. Additionally, the circulation pump 600 pressurizes the fluid discharged from the discharge port 212' to flow in one direction toward the injection port 211'. The pressure measurement unit 700 may be disposed between the discharge port 212' and the heat exchange unit 500 and may be installed on (or along) the circulation line 400. The pressure measurement unit 700 measures the pressure of the fluid discharged through the discharge port 212'. The control unit 800 may be electrically connected to the circulation pump 600 and the pressure measurement unit 700. The control unit 800 can help absorb the volume expansion due to swelling of the battery cell by adjusting the volume of the fluid in the circulation line according to the pressure of the fluid measured by the pressure measurement unit 700.

The battery cell cooling member and the battery module including the cooling member according to an embodiment of the present disclosure can be cooled by a cooling fluid supplied through the fluid supply device during charging. Accordingly, heat generation and swelling can be prevented together during battery cell charging without increasing battery module size or increasing manufacturing cost by providing the fluid supply device outside the battery.

The fluid supply device, according to an embodiment of the present disclosure, measures the pressure of the cooling fluid discharged from the discharge port 212' through the pressure measurement unit, and when the pressure changes due to swelling of the battery cell, the volume of the cooling fluid existing in the cooling path is adjusted by the control unit 800 to adjust the pressure of the fluid in the cooling path. Accordingly, the pressure change due to the swelling can be alleviated.

A battery cooling system, according to one embodiment of the present disclosure, can decrease the volume of the cooling fluid in the cooling member through the control unit 800 when the pressure of the cooling fluid measured by the pressure measurement unit 700 is higher than reference pressure. In such a case, the reference pressure may be based on a value obtained by adding the pressure of the pump required to supply the fluid to the atmospheric pressure. The pressure of the pump required to supply the fluid may be increased when the temperature of the cell is high or may be decreased when the temperature of the cell is low depending on the characteristics of the cell to be cooled. For example, when the pressure of the cooling fluid is higher than the reference pressure, the pressure measurement unit 700 may allow the control unit 800 to decrease the volume of the cooling fluid through an electric signal.

The battery cooling system, according to one embodiment of the present disclosure, may increase the volume of the cooling fluid in the cooling member through the control unit 800 when the pressure of the cooling fluid measured through the pressure measurement unit 700 is lower than reference pressure. In such a case, the reference pressure may be based on a value obtained by adding the pressure of the pump required to supply the fluid to the atmospheric pressure. The pressure of the pump required to supply the fluid may be increased when the temperature of the cell is high or may be decreased when the temperature of the cell is low depending on the characteristics of the cell to be cooled. For example, when the pressure of the cooling fluid is lower than the reference pressure, the pressure measurement unit 700 may allow the control unit 800 to increase the volume of the cooling fluid through an electric signal.

In one embodiment of the present disclosure, the volume control by the control unit 800 can be mechanically performed through a passage connected to the atmosphere. For example, the circulation line 400 can be an open system and configured under pressure equal to the atmospheric pressure, so that when the pressure increases, the fluid can flow out toward the atmosphere by the amount of increased pressure.

The battery module, according to an embodiment, can be configured having a structure in which the battery cells described above are stacked.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. For example, one type or more selected among complex oxides of metal, selected among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0<α<2); LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0<α<2); LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); and LiₐFePO₄ (0.90 ≤ a ≤ 1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material and may further include a binder and/or a conductive material.

Content of the positive electrode active material may be in a range of about 90 wt.% to about 99.5 wt.% with respect to the positive electrode active material layer 100 wt.%. Content of the binder and the conductive material may be in a range of about 0.5 wt.% to about 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example, the negative electrode active material layer may include the negative electrode active material in a range of about 90 wt.% to about 99 wt.%, the binder in a range of about 0.5 wt.% to about 5 wt.%, and the conductive material in a range of 0 wt.% to about 5 wt.%.

A nonaqueous-based binder, an aqueous-based binder, a dry binder, or a combination of them may be used as the binder. When the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may act as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, when the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Although the present disclosure has been described above in connection with example embodiments and drawings, the present disclosure is not limited to the embodiments described herein. A person having ordinary knowledge in the art to which the present disclosure pertains may modify and change the present disclosure within the technical scope of the present disclosure and the equivalent range of the following claims.

## Claims

1. A battery cell cooling member (12) configured to be arranged between adjacent battery cells (11, 214), the battery cell cooling member (12) comprising:
two facing plates (112) between the battery cells (11, 214) to face the battery cells (11, 214), respectively; and
an elastic pad (111) between the two facing plates (112) to absorb volume expansion due to swelling of the battery cell (11, 214), the elastic pad (111) has a cooling path (113, 133') through which cooling fluid supplied from an outside of the battery cells (11, 214) flows.

2. The battery cell cooling member (12) as claimed in claim 1, wherein the cooling path (113, 133') is in the form of one or more straight or curved shapes so that the cooling fluid flows along one surface of the battery cell (11, 214).

3. The battery cell cooling member (12) as claimed in claim 1 or 2, wherein the cooling fluid is a gas, a liquid, or a mixture of the gas and the liquid and/or wherein the cooling member (213) has a thickness in a range of 2.5 mm to 5 mm.

4. The battery cell cooling member (12) as claimed in claims 1 to 3, wherein the elastic pad (111) is made of polyurethane foam and/or wherein the elastic pad (111) has a thickness in a range of 1.7 mm to 3.4 mm.

5. The battery cell cooling member (12) as claimed in claims 1 to 4, wherein the facing plates (112) are made of aluminum (Al).

6. The battery cell cooling member (12) as claimed in claims 1 to 5, further comprising a tube (223) extending along the cooling path (113, 133').

7. A battery module comprising:
a plurality of battery cells (11, 214); and
a battery cell cooling member (12) between adjacent ones of the battery cells (11, 214), the battery cell cooling member (12) comprising:
two facing plates (112) on an inner side between the adjacent ones of the battery cells (11, 214) to face the battery cells (11, 214), respectively; and
an elastic pad (111) between the two facing plates (112) to absorb volume expansion due to swelling of one or both of the battery cells (11, 214), the elastic pad (111) having a cooling path (113, 133') along which cooling fluid supplied from an outside of the battery module flows.

8. The battery module as claimed in claim 7, wherein the cooling path (113, 133') is in the form of one or more straight or curved shapes so that the cooling fluid flows along one surface of the battery cell (11, 214).

9. The battery module as claimed in claim 7 or 8, wherein the cooling fluid is a gas, a liquid, or a mixture of the gas and the liquid and/or wherein the battery cell cooling member (12) has a thickness in a range of 2.5 mm to 5 mm.

10. The battery module as claimed in claims 7 to 9, wherein the elastic pad (111) is made of polyurethane foam and/or wherein the elastic pad (111) has a thickness in a range of 1.7 mm to 3.4 mm.

11. The battery module as claimed in claims 7 to 10, wherein the facing plates (112) are made of aluminum (Al).

12. The battery module as claimed in claims 7 to 11, further comprising a tube (223) extending along the cooling path (113, 133').

13. A battery cooling system comprising:
a battery cell cooling member (12) comprising two facing plates (112) formed on an inner side between two adjacent battery cells (11, 214) in a battery module to face the battery cells (11, 214), respectively, and an elastic pad (111) between the two facing plates (112) to absorb volume expansion due to swelling of the battery cells (11, 214), the elastic pad (111) having a cooling path (113, 133') along which cooling fluid supplied from outside of the battery module flows; and
a fluid supply device outside of the battery module and configured to supply cooling fluid to the battery cell cooling member (12).

14. The battery cooling system as claimed in claim 13, wherein the fluid supply device comprises:
a fluid transfer unit outside the battery module to receive the cooling fluid and comprising an injection port (211, 211') into which the cooling fluid is injected and a discharge port (212, 212') through which the cooling fluid injected through the injection port (211, 211') is discharged;
a circulation line (400) connecting the injection port (211, 211') and the discharge port (212, 212') and through which the cooling fluid is circulated;
a heat exchange unit (500) installed along the circulation line (400);
a circulation pump (600) installed along the circulation line (400) and configured to pump the cooling fluid to flow in one direction;
a pressure measurement unit (700) installed along the circulation line (400) and configured to measure a pressure of the cooling fluid discharged through the discharge port (212, 212'); and
a controller configured to control volume of the cooling fluid according to pressure of the cooling fluid.

15. The battery cooling system as claimed in claim 14, wherein, when the pressure of the cooling fluid measured by the pressure measurement unit (700) is higher than a reference pressure, the fluid supply device is configured to decrease a volume of the cooling fluid in the battery cell cooling member (12) via the controller or when the pressure of the cooling fluid measured by the pressure measurement unit (700) is lower than a reference pressure, the fluid supply device is configured to increase a volume of the cooling fluid in the battery cell cooling member (12) via the controller.
